# EUROPEAN PATENT SPECIFICATION

(11) **EP 3 297 822 B1**
(45) Date of publication and mention of the grant of the patent: **26.06.2019**
(21) Application number: 16725821.9
(22) Date of filing: 20.05.2016
(51) Int. Cl.: B32B 5/20, B32B 7/08, B32B 27/06, B32B 27/30, B32B 27/32, B32B 27/34, B32B 27/36, B32B 3/08

(54) **MULTILAYER ASSEMBLY**
MEHRSCHICHTANORDNUNG
ENSEMBLE MULTICOUCHE

(30) Priority: 22.05.2015 EP 15169033
(43) Date of publication of application: 28.03.2018
(73) Proprietor: Raigi, 28310 Rouvray Saint Denis (FR); Franca, Nicole, 2970 Schilde (BE); Perrier, Olivier, 45170 Neuville aux Bois (FR)
(72) Inventor: PERRIER, Olivier, 45170 Neuville aux Bois (FR); DETILLOUX, Jozef, 59147 Gondecourt (FR)
(74) Representative: Gevers Patents
(86) International application number: PCT/EP2016/061500
(87) International publication number: WO 2016/188926

(56) References cited:
- WO-A1-2015/015164
- US-A1- 2006 062 993

## Description

### Field of invention

The present invention relates to a multilayer assembly having improved adhesion among the single layers, to a process for the manufacture of said multilayer assembly, to a shaped article comprising said multilayer assembly and to a process for the manufacture of said shaped article.

### Background of the invention

The manufacturing of molded products with at least two layers of materials by using a variety of molding techniques, in particular rotational molding is common practice in the industry today. A typical material combination that is used for the manufacturing of molded products which are under severe mechanical loads such as notably traffic barricades, fuel tanks, cooler boxes, carrying cases for paramedics, dock floats, pool liners, is a thermoplastic material (e.g. polyethylene) and polyurethane. For example, a polyurethane foam filling of molded articles, in particular rotationally molded articles, is a way to improve the mechanical properties of said articles. However, because of the incompatibility of polyurethane and the molded thermoplastics, in particular rotomolded thermoplastics, there is insufficient adhesion or "non-stick" between the foamed polyurethane layer and the molded thermoplastic layer. In other words, the interface is weak and over time, the outer casing of such molded articles may be deformed as it detaches from the inner layer of foam under the influence of various factors such as notably sudden changes in temperature from extreme hot to cold and vice versa, moving of parts relative to each other, punctual mechanical load and the like.

US 2006/062993 describes that a laminated member has a multi-layered structure serving as a base material for forming an interior ceiling inside an automobile, and an automobile interior ceiling material formed of the laminated member.

WO 2015/015164 A1 discloses plastic bodies comprising a first plastic layer and a second plastic layer made by rotational molding and a core comprising a plastic foam. The second plastic layer, which is in contact with the plastic foam core, further comprises a coupling agent and a filler.

In order to address adhesion problems, as discussed above, two major types of processes involving chemical adhesions has been described in the prior art.

In a first type of processes, the enhanced adhesion properties are obtained by chemical modification of the surface of the molded thermoplastic layer in particular a molded polyethylene (PE) layer under the conditions of thermal or chemical treatment. In particular, gaseous active species excited by gas molecules have been widely used to modify the surface of thermoplastic polymers. Excited gas-phase techniques are well known in the art and include notably corona discharge, plasma, flame and ozone treatment. These techniques utilize a gaseous flow which is contacted with a high energy source such as notably high energy electrical discharge, shock waves, microwaves, lasers, and radio frequency. Upon contact with the high energy source, a number of relatively high energy ionic and radical species form within the gas are able to react with the thermoplastic polymer surface, changing the surface structure. Specifically, appropriate treatment results in the formation of functional groups, such as hydroxyl and carboxylate groups, at the thermoplastic polymer surface layers which are able to react with the functional groups of the polyurethane (e.g. the isocyanate (NCO) groups) thereby increasing the adhesion properties.

One of the major drawbacks of these surface treatment methods is that they cannot be used for the treatment of inaccessible parts of articles having complex shapes, such as hollow 3 D-shapes, unless high investments are necessary such as the implementation of special equipment (e.g. heavy installations, special robots and the like).

Moreover, the chemical treatment methods, in particular the treatment with ozone or with liquid chemical compounds may cause interior contamination of the article, possibly resulting in chemical degradation of the interior materials which can lead to environmental hazards and health effects, such as cancer.

In a second type of processes, adhesion can be enhanced by adding a compatibilizer that is capable of staying at the interface and entangling with both sides. One of these approaches includes the use of synthesized functionalized polyolefins, such as notably maleic anhydride (MA)-modified polyethylenes (Pes) and polypropylenes (PPs) or primary/secondary amino-functionalized PPs in which the functional groups can be coupled with the free isocyanates of polyurethane. One of the drawbacks of these second type of processes is that they involve expensive processes.

In both type of processes, regardless which method is used, there is the additional disadvantage that there are extreme difficulties in recycling these multi-layer/multi-material articles due to fact that the foamed polyurethane layer and the molded thermoplastic layer cannot be separated anymore.

Thus, there is a current shortfall in the art for environmentally friendly multi-layer/multi-material articles having an improved interlayer adhesion between a thermoplastic layer and a thermosetting material layer, in particular a polyurethane foam layer wherein said articles have improved mechanical properties, in particular enhanced bending strength, while at the same time said articles retain their excellent insulation properties and their shape during long periods of time, in particular no distortion occurs of the thermoplastic layer relative to the underlying polyurethane foam layer, especially under extreme conditions such as variable external pressure (e.g. submerging at great depth), such as variable external pressure (e.g. submerging at great depth), or important temperature and humidity variations (parts in extreme outmospheres).

### Summary of the invention

The inventors have now found surprisingly that it is possible to provide an improved multilayer assembly fulfilling the above mentioned needs and does not have the drawbacks as discussed above.

It is thus an object of the present invention to provide a multi-layer assembly comprising:
i. at least one first layer [layer (L1), herein after] made from a thermoplastic polymer [polymer T_{L1}] selected from the group of ethylene-based polymers, polypropylene-based polymers, polyvinyl chloride (PVC) polymers, polyamide polymers and polycarbonate polymers and mixtures thereof; and
ii. anchoring elements, wherein said anchoring elements are adhered to said layer (L1) and are projecting from a surface of said layer (L1) and wherein said anchoring elements are made from at least one thermoplastic polymer [polymer Tₐₑ, herein after], wherein said polymer Tₐₑ is equal to or different from the polymer T_{L1} comprised in layer (L1); and
iii. at least one second layer [layer (L2)], wherein said anchoring elements adhered to said layer (L1) are penetrating into said layer (L2) thereby anchoring layer (L1) to layer (L2) and wherein said layer (L2) comprises a thermoset polyurethane foam.

It is a further object of the present invention to provide a process of producing said multilayer assembly.

It is also a further object of the present invention to provide articles comprising said multilayer assembly and the manufacturing thereof.

### The multilayer assembly

Within the context of the present invention, the expression "at least one first layer [layer (L1), herein after]" is intended to denote one or more than one layer (L1).

It is understood that the same applies for the expression "at least one second layer [layer (L2)]".

As said, polymer T_{L1} is selected from the group of ethylene-based polymers, polypropylene-based polymers, polyvinyl chloride (PVC) polymers, polyamide polymers and polycarbonate polymers and mixtures thereof.

Preferably, the polymer TL₁ is chosen among ethylene-based polymers, polypropylene-based polymers or mixture thereof, more preferably, the polymer T_{L1} is selected from ethylene-based polymers.

For the purposes of the present invention, the expression "ethylene-based polymers" is understood to denote ethylene homopolymers, copolymers of ethylene with at least one co-monomer as well as mixtures including ethylene homopolymers and/or ethylene copolymers.

As an example of such a mixture, mention may be notably made of the commercially available Bio-TP Seal®, polylactic acid (PLA) integrated into a poyolefin structure.

Among co-monomers mention may be notably made of propylene, isobutylene, 1-butene, 1-pentene, 1-hexene, 3 -methyl- 1-pentene, 4-methyl-l-pentene, and 1-octene, 1,4-hexadiene, 1,6 octadiene, 5-methyl-1,4-hexadiene, 3,7 -dimethyl-1,6-octadiene, dicyclopentadiene (DCPD), norbornadiene, isoprene, styrene, halo-substituted styrene, alkyl-substituted styrene, cyclo-alkenes such as cyclopentene, cyclohexene, cyclooctene, vinyl acetate.

Non limitative examples of ethylene-based polymers include notably high density polyethylene (HDPE), low density polyethylene (LDPE), linear low density polyethylene (LLDPE) or linear medium density polyethylene (LMDPE), ethylene-propylene copolymers, ethylene-vinyl acetate (EVA) copolymers and the like.

Preferred ethylene-based polymers are high density polyethylene (HDPE), low density polyethylene (LDPE) and linear low density polyethylene (LLDPE).

For the purposes of the present invention, the expression "propylene-based polymers" is understood to denote propylene homopolymers as well as copolymers of propylene with at least one co-monomer.

Alpha-olefins are typical examples of co-monomers of propylene copolymers. The alpha-olefin is preferably ethylene or a C₄₋₂₀ linear, branched or cyclic -olefin including notably 1-butene, 4-methyl-l-pentene, 1-hexene, 1 -octene, 1-decene, 1 -dodecene, 1 -tetradecene, 1 -hexadecene, 1-octadecene cyclohexane or cyclopentane.

The polymer T_{L1}, in particular ethylene-based polymers, as detailed above, are notably commercially available, or can be obtained from recycled thermoplastic materials including the use of known recycling processes. Thus, the polymer TL₁ may be a non-recycled, a recycled or a blend of recycled and non-recycled polymer.

Layer (L1) may further comprise one or more optional ingredients such as pigments, colorants, antioxidants, antiflame agents, light and ultraviolet radiation stabilizers, fluorescent whitening agents, fillers, gelling agents, antistatic agents, anti-fogging agents, expanders and the like.

Advantageously, the layer (L1) possess a thickness of at most 30 mm, preferably of at most 25 mm, more preferably of at most 20 mm, more preferably of at most 15 mm, even more preferably of at most 8 mm.

As per the lower limit of thickness of layer (L1), this is not particularly limited, provided that said layer (L1) can still provide the mechanical properties and/or the insulation properties required for the particular field of use targeted.

In general, the lower limit of thickness of layer (L1) is determined by the choice of the manufacturing method of said layer (L1), as discussed in detail below. Depending on the choice of the manufacturing method, the minimum thickness of the layer (L1) can vary from 50 µm up to 2.5 mm, preferably from 50 µm up to 2.0 mm, even more preferably from 75 µm to 1.0 mm.

The anchoring elements adhered to the layer (L1) in the multi-layer assembly of the present invention are made from at least one thermoplastic polymer [polymer Tₐₑ, herein after], wherein said polymer Tₐₑ is equal to or different from the polymer T_{L1} comprised in layer (L1).

Within the context of the present invention, the expression "at least one thermoplastic polymer [polymer Tₐₑ, herein after]," is intended to denote one or more than one polymer Tₐₑ. In other words, this means that all anchoring elements may be made from one polymer Tₐₑ or more than one polymer Tₐₑ.

Preferably, the anchoring elements are made from one polymer Tₐₑ.

Advantageously, the polymer Tₐₑ ,equal to or different from the polymer T_{L1} comprised in layer (L1), is independently selected from the group of ethylene-based polymers, polypropylene-based polymers, polyvinyl chloride (PVC) polymers, polyamide polymers and polycarbonate polymers and mixtures thereof.

The same definitions and preferences for the ethylene-based polymers and polypropylene-based polymers, as described above, apply here.

According to one embodiment of the present invention, the polymer Tₐₑ is equal to the polymer T_{L1} comprised in layer (L1).

According to another embodiment of the present invention, the polymer Tₐₑ is different from the polymer T_{L1} comprised in layer (L1).

Should the anchoring elements be adhered to the layer (L1) by applying welding techniques, as discussed in detail below, then the polymer T_{L1} and polymer Tₐₑ are both simultaneously selected from the group of ethylene-based polymers, polypropylene-based polymers, polyvinyl chloride (PVC) polymers, polyamide polymers or polycarbonate polymers or mixtures thereof.

According to one preferred embodiment of the present invention, the polymer T_{L1} and polymer Tₐₑ, equal to or different from each other and at each occurence, is independently selected from a group consisting of high density polyethylene (HDPE), low density polyethylene (LDPE), linear low density polyethylene (LLDPE) or linear medium density polyethylene (LMDPE), ethylene-propylene copolymers, ethylene-vinyl acetate (EVA) copolymers and the like.

In the multi-layer assembly of the present invention, the anchoring elements adhered to the layer (L1) can have any shape. For example, the shape of the anchoring elements can be a spherical, ellipsoid, cone-like, pyramid-like, wire-like, rod-like, sheet-like, flake-like, or any irregular shape.

In general, said anchoring elements have a size so that when they are adhered to the layer (L1), they project out from the surface of said layer (L1).

Advantageously, the anchoring elements have projecting portions which provides undercuts to increase the pull-off strength, i.e. the strength of adhesion between layer (L1) and layer (L2).

For the purpose of the present, the expression "undercuts" is intended to refer to the overhanging portions of the anchoring elements when seen in the direction perpendicular to the surface of the layer (L1).

According to an advantageous embodiment of the present invention, the weight of the anchoring elements per unit area of the layer (L1) is of at least 300 g/m², preferably at least 500 g/m², more preferably at least 750 g/m² and more preferably at least 900 g/m².

As per the higher limit of the weight of the anchoring elements per unit area of the layer (L1), this is not particularly limited.

According to an advantageous embodiment of the present invention, the weight of the anchoring elements per unit area of the layer (L1) is of at most 1800 g/m², preferably at most 1500 g/m² and more preferably at most 1300 g/m².

According to an advantageous embodiment of the present invention, at least 70 %, preferably at least 80 % and more preferably at least 90% of the anchoring elements are uniformly distributed over the layer (L1).

According to an advantageous embodiment of the present invention, the volume of the anchoring elements may range from 1 to 100 mm³, depending on the particular field of use targeted.

As said, the anchoring elements, as detailed above, adhered to and projecting out from the surface of said layer (L1) are able to penetrate into the layer (L2) thereby anchoring layer (L1) to layer (L2).

For the sake of convenience in the rest of the text, the anchoring elements, as detailed above, anchoring layer (L1) to layer (L2) will be called anchoring elements (AE_{L1→L2}).

The Inventors have surprisingly found that mechanical anchoring of layer (L1) to layer (L2) by using the anchoring elements (AE_{L1→L2}), as detailed above, dramatically increases the pull-off strength, i.e. the strength of adhesion between layer (L1) and layer (L2) and the mechanical bending strength of the multi-layer assembly of the present invention.

The strength of adhesion can be measured according to known methods in the art.

The strength of adhesion is preferably measured according to the ASTM D-4541 standard test.

Layer (L2) of the multi-layer assembly of the present invention comprises, preferably essentially consists of; a thermoset polyurethane foam.

For the purpose of the present invention, the expression "consists essentially of" are intended to denote that any additional ingredient different from the thermoset polyurethane foam is present in an amount of at most 1 % by weight, based on the total weight of the thermoset polyurethane foam.

The thermoset polyurethane foam of the layer (L2) of the multi-layer assembly of the present invention may be an open cell foam or closed cell foam.

As per the density of the thermoset polyurethane foam layer (L2), this is not particularly limited, provided that said layer (L2) has the properties required for the particular field of use targeted.

Therefore, the foam may also be a flexible or a rigid foam, depending upon the required properties of the multi-layer assembly of the present invention in view of its particular field of use targeted.

The thickness of layer (L2) in the multilayer assemblies according to the invention is not critical and obviously depends on the use for which said assemblies are intended.

Layer (L2) may further comprise one or more optional ingredients such as pigments, colorants, antioxidants, antiflame agents, light and ultraviolet radiation stabilizers, fluorescent whitening agents, fillers, gelling agents, antistatic agents, anti-fogging agents, expanders and the like.

According to certain embodiments of the present invention, anchoring elements [anchoring elements (AE_{L1→L3}), herein after] equal to or different from anchoring elements (AE_{L1→L2}), made from at least one thermoplastic polymer [polymer T_{ae(L3)}, herein after], are additionally adhered to layer (L1) on the opposite side of layer (L2).

While choice of anchoring elements (AE_{L1→L3}) is not particularly limited, embodiments which are particularly suitable to the purpose of the invention are those wherein anchoring elements (AE_{L1→L3}) is made from a polymer T_{ae(L3)} possessing same features as polymer Tₐₑ, as detailed above; preferably, T_{ae(L3)}, of anchoring elements (AE_{L1→L3}) is identical to polymer Tₐₑ of anchoring elements (AE_{L1→L2}).

All features detailed above for anchoring elements (AE_{L1→L2}) can be provided for anchoring elements (AE_{L1→L3}) of this embodiment.

According to this embodiment, the multilayer assembly may additionally comprise a third layer [layer (L3)], wherein the anchoring elements (AE_{L1→L3}) additionally adhered to layer (L1) on the opposite side of layer (L2) are penetrating into said layer (L3) thereby anchoring layer (L1) on the opposite side of layer (L2) to layer (L3) and wherein said layer (L3) comprises a thermoset polyurethane foam.

All features detailed above for layer (L2) can be provided for layer (L3) of this embodiment.

### Manufacturing of the multilayer assembly

The invention also pertains to a method for manufacturing the multilayer assembly, as detailed above, wherein said method comprises the steps of:
(a) providing the layer (L1), as detailed above, made from the polymer T_{L1}, as detailed above,
(b) adhering the anchoring elements (AE_{L1→L2}), as detailed above, to said layer (L1), thereby providing that said anchoring elements (AE_{L1→L2}) are projecting out from the surface of said layer (L1), and
(c) applying the layer (L2), as detailed above, thereby allowing said anchoring elements (AE_{L1→L2}) adhered to said layer (L1) to penetrate into said layer (L2), and
(d) optionally, adhering the anchoring elements (AE_{L1→L3}), as detailed above, to layer (L1) on the opposite side of layer (L2), and
(e) optionally, applying the layer (L3), as detailed above, thereby allowing said anchoring elements (AE_{L1→L3}) adhered to the opposite side of said layer (L1) to penetrate into said layer (L3).

All definitions and preferences, as described above, equally apply here in this aspect of the present invention.

According to certain embodiments of the present invention, the layer (L1) made from the polymer T_{L1}, as detailed above, can be manufactured by known processing techniques in the art, those including notably blow molding, injection molding, inflation extrusion molding, slush molding, thermoforming and rotational molding, thereby using the polymer T_{L1} in solid form (i.e. powder or pellets) or liquid form, a prepolymer of the polymer T_{L1} (in powder or liquid state) or a monomer mixture able to polymerize to the polymer T_{L1} (e.g. reactive rotational molding process).

The choice of one or other of these processing techniques for the preparation of said layer (L1) is made on the basis of the use for which the multilayer assemblies are intended, as well as the thicknesses of said layer (L1). As a matter of fact, the minimum thickness of the layer (L1) is about 1 mm by use of the rotational molding technique, about 0.5 mm by use of the gas injection molding technique, and about 0.2 mm by use of the blow molding technique.

Preferably, the layer (L1) in the multilayer assembly of the present invention is prepared by using the rotational molding technique. In particular, the rotational molding technique allows the manufacturing of complex shaped solid and hollow articles (e.g. cooler boxes, oil tanks) It is known that the equipment used in rotational molding may have many variations including notably the multi-spindle machine, the carrousel machine, the shuttle-type machine, the rock and roll machine, the clamshell machine, CMT rotomolded, rotomolding machines foreseen with thermal regulation in the mold, such as the commercially available Persico Leonardo Rotomoulding, the latter is in particular preferred.

According to an alternative embodiment of the present invention, the layer (L1) made from the polymer T_{L1}, as detailed above, represents at least a portion of a recycled plastic material such as notably, an recycled insulation plate and the like.

In step (b) of the method for manufacturing the multilayer assembly according to the invention, the anchoring elements (AE_{L1→L2}), as detailed above, can be adhered to the layer (L1), as detailed above, by using known gluing techniques or welding techniques.

Step (b) of the method for manufacturing the multilayer assembly according to the invention is performed in a particularly preferred manner by welding techniques known in the art. A general discussion of welding techniques is provided by D. Grewell and A. Benatar in Intern. Polymer Processing XXII (2007), pages 43 - 60, the whole content of which is herein incorporated by reference.

It is further understood that the skilled person in the art will carry out said welding techniques according to general practice such as notably applying optimal welding times, heating (internal and/or external), interfacial pressure and the like, provided that the anchoring elements (AE_{L1→L2}), as detailed above, are projecting out from the surface of the layer (L1) of the multilayer assembly according to the invention, as discussed in detail above.

When step (b) of the method for manufacturing the multilayer assembly according to the invention is carried out by using welding techniques than the multilayer assembly may advantageously be dismantled by using methods comprising the steps of a) heating the multilayer assembly and b) separating the layer (L1), the anchoring elements (AE_{L1→L2}) and the layer (L2).

Said anchoring elements (AE_{L1→L2}) can be prepared by using a variety of known methods including notably processes for the recycling of waste thermoplastic articles. Among waste thermoplastic articles mention may be notably made of ethylene-based polymer waste articles, in particular HDPE bottles and parts thereof, such as milk, detergent, oil, water and soda, HDPE toys and plastic bags, and the like.

According to a preferred embodiment of the method of the present invention, the anchoring elements (AE_{L1→L2}) are prepared from waste thermoplastic articles, as detailed above. Specifically, said waste thermoplastic articles, are reduced in size by using conventional size reduction methods such as grinding methods, milling methods and/or chopping methods, grinding methods are particularly preferred, thereby providing the anchoring elements (AE_{L1→L2}), as detailed above.

Suitable grinding equipment may notably include the commercially available Pallmann Open Rotor 50 HP Grinder and RAPID Grinder/Granulator 1012-K (Lindner).

Step (a) and step (b) of the method for manufacturing the multilayer assembly according to the invention can be carried out at the same time or sequentially.

In the context of the present invention, it is understood that when step (a) and step (b) are carried out at the same time that the anchoring elements (AE_{L1→L2}), as detailed above, are added during the manufacturing of layer (L1) in step (a) of the method for manufacturing the multilayer assembly according to the invention in such a manner that said anchoring elements (AE_{L1→L2}) are projecting out from the surface of the layer (L1), as discussed in detail above. In this embodiment, the anchoring elements (AE_{L1→L2}) are preferably added towards the end of step (a), either when the layer (L1) is still in a molten state or when the layer (L1) is almost polymerized.

Step (b) of the method for manufacturing the multilayer assembly according to the invention can be performed either by manual introduction of the anchoring elements (AE_{L1→L2}), as detailed above, or by the use of a drop-box, known in the art.

Manual addition involves generally introducing the anchoring elements (AE_{L1→L2}) into the mold by using means such as notably a fennel, hole opening, orifice. Said means may optionally be attached to the mold.

A drop-box is typically an insulated container that holds material until said material need to be released at the appropriate time during the cycle. For example, a drop box for a rotational molding system may inject the anchoring elements (AE_{L1→L2}) into the mold while the polymer TL1 (preferably powder or pellets) in the mold melts or is almost polymerized and forms the layer (L1) being spread against the inside of the mold by the rotational motion.

Thus, the Inventors have surprisingly found that step (b) of the method according the invention can be performed in a technically simple and an environmentally, economically viable manner by using cheap starting materials (e.g. recyclable materials) and existing equipment.

Preferably, prior to step (c) of the method for manufacturing the multilayer assembly according to the invention, the layer (L1) to which the anchoring elements (AE_{L1→L2}) are adhered and projecting out from the surface of said layer (L1) is cooled by using known cooling techniques in the art.

Then, in step (c) of the method for manufacturing the multilayer assembly according to the invention, the layer (L2) comprising, preferably essentially consisting of the thermoset polyurethane foam can be applied by using different polyurethane foam techniques known in the art those including notably RIM (reaction injection moulding) processes, gravity moulding processes and spray processes.

Suitable PU foamable compositions for making the polyurethane foam layer (L2) by the RIM or spray process are disclosed for example in EP-B-0 379 246, the whole content of which is herein incorporated by reference.

The PU foamable composition for obtaining the polyurethane foam layer (L2) is preferably composed in such a manner that said PU foamable composition may be applied with an optimal degree of overpacking, i.e. having an optimal ratio of the average density of the produced PU foam relative to the free rise density of the PU foamable composition, thereby allowing the PU foamable composition to fill the open space beneath the undercuts of the anchoring elements (i.e. interstices), as described above. Subsequently, said PU foamable composition is then allowed to foam, in particular as well into said interstices, thereby forming the polyurethane foam layer (L2) into which the anchoring elements (AE_{L1→L2}) adhered to said layer (L1) are penetrated.

As per the dynamic viscosity of the PU foamable composition, this is not particularly limited, provided that said PU foamable composition can arrive on top of the layer (L1) and into the interstices, as detailed above.

For example, an visco-elastic foam layer (L2) can be made from a PU foamable composition including visco polyols having a dynamic viscosity ranging from 300 to 2000 mPa.s, depending upon the required properties of the foam in view of the particular field of use targeted for the multi-layer assembly of the present invention.

According to certain preferred embodiments of the present invention, the PU foamable composition has a dynamic viscosity, measured at a shear rate of 1/s, which is smaller than 2000 mPa.s, or smaller than 1000 mPa.s, or smaller than 500 mPa.s or even smaller than 100 mPa.s.

All features detailed above for step (b) equally apply for step (d) and all features detailed above for step (c) equally apply for step (e).

The Inventors have surprisingly found that the multilayer assembly according to the invention has an improved interlayer adhesion between the layer (L1) and the layer (L2), and optionally the layer (L3). Advantageously, the strength of adhesion between layer (L1) and layer (L2), as measured on an Elcometer 106 according to the standard test method ASTM D 4541, is at least 0.5 N/mm², preferably at least 2 N/mm², more preferably at least 2 N/mm², even more preferably at least 7 N/mm².

### Shaped Articles

The invention also relates to the use of the multilayer assemblies according to the invention for the manufacture of shaped articles or at least parts thereof, such as notably tubes, pipes, claddings, sheets, profiles, plaques and hollow bodies.

Said shaped articles or at least parts thereof, are also an aspect of the present invention.

The manufacturing of said shaped articles or at least parts thereof, is another aspect of the present invention.

According to a specific embodiment of the present invention, a hollow body may be manufactured by using the rotational molding technique, according to step (a) of the method of the present invention, whereby the anchoring elements, as detailed above, can be introduced via at least one hole in the hollow body, and be adhered according to step (b) of the method of the present invention and a suitable PU foamable compositions, as described above may then be further injected through the at least one hole and foamed, as described above in step (c) of the method of the present invention.

Further, in addition, according to a further embodiment, the fields of use which have been found particularly interesting for the multilayer assemblies of the present invention are in the domain of various applications such as maritime; military; automotive; medical; construction; agricultural; packaging such as notably stackable containers, pallets, and tanks; sports and leisure; furniture; water treatment; refrigeration such as notably refrigerated boxes; transport such as traffic barriers; traffic cones

Among maritime applications mention may be notably made of marina offshore buoyancy and marine safety equipment industries (e.g. navigation aids, mooring and marker buoys, boom floats, fuel tanks, net floats, fenders and the like).

### Examples

The invention will be now described in more details with reference to the following examples, whose purpose is merely illustrative and not intended to limit the scope of the invention.

### Example 1 - Manufacture of a multilayer assembly by using rotational molding

A layer (L1) having a thickness of 5 mm, a length of 40 cm and a width of 40 cm was prepared by rotomolding powdered high-density polyethylene (average particle size of 300 micron) using the carrousel rotational molding equipment. At the end of the heating cycle, anchoring elements obtained by grinding a recycled HDPE bottle cap using a Pallmann Open Rotor 50 HP Grinder were introduced into the mold using a dropbox and a classic rotomolding cycle was performed. After cooling the mold, intermediate assembly (i.e.the layer (L1) with the anchoring elements adhered to) was transferred to a conventional foam forming equipment (a conformator). A polyurethane foam was applied by means of a two component mixing head and the mold was closed to produce the polyurethane foam layer having a thickness of about 30 mm and a density of 30 g/l. The liquid precursors were passed through a mixing head at a flow rate of 60 g/sec, the total polymerization time was 45 min.

A multilayer assembly was obtained which was having a good adherence between the different layers and the strength of adhesion between the different layers, as measured on an Elcometer 106 according to the standard test method ASTM D 4541, was 7 N/mm².

## Claims

1. A multi-layer assembly comprising:
i. at least one first layer [layer (L1), herein after] made from a thermoplastic polymer [polymer T_{L1}] selected from the group of ethylene-based polymers, polypropylene-based polymers, polyvinyl chloride (PVC) polymers, polyamide polymers and polycarbonate polymers and mixtures thereof; and
ii. anchoring elements, wherein said anchoring elements [anchoring elements (AE_{L1→L2}), herein after] are adhered to said layer (L1) and are projecting from a surface of said layer (L1) and wherein said anchoring elements (AE_{L1→L2}) are made from at least one thermoplastic polymer [polymer Tₐₑ, herein after], wherein said polymer Tₐₑ is equal to or different from the polymer T_{L1} comprised in layer (L1); and
iii. at least one second layer [layer (L2)], wherein said anchoring elements (AE_{L1→L2}) adhered to said layer (L1) are penetrating into said layer (L2) thereby anchoring layer (L1) to layer (L2) and wherein said layer (L2) comprises a thermoset polyurethane foam.

2. The multi-layer assembly according to claim 1, wherein the thickness of layer (L1) is of at most 25 mm.

3. The multi-layer assembly according to claim 1 or claim 2, wherein the polymer Tₐₑ, equal to or different from the polymer T_{L1} comprised in layer (L1), is independently selected from the group of ethylene-based polymers, polypropylene-based polymers, polyvinyl chloride (PVC) polymers, polyamide polymers and polycarbonate polymers and mixtures thereof.

4. The multi-layer assembly according to any one of the claims 1 to 3, wherein the anchoring elements (AE_{L1→L2}) have any shape.

5. The multi-layer assembly according to any one of the claims 1 to 4, wherein the anchoring elements (AE_{L1→L2}) have projecting portions which provides undercuts to increase the pull-off strength between layer (L1) and layer (L2), as measured according to the ASTM D-4541 standard test.

6. The multi-layer assembly according to any one of the claims 1 to 5, wherein the weight of the anchoring elements (AE_{L1→L2}) per unit area of the layer (L1) is of at least 300 g/m², preferably at least 500 g/m², more preferably at least 750 g/m² and more preferably at least 900 g/m².

7. The multi-layer assembly according to any one of the claims 1 to 6, wherein at least 70 %, preferably at least 80 % and more preferably at least 90% of the anchoring elements are uniformly distributed over the layer (L1).

8. The multi-layer assembly according to any one of the claims 1 to 7, wherein the thermoset polyurethane foam is flexible or rigid.

9. The multi-layer assembly according to any one of the claims 1 to 8, wherein the multi-layer assembly further comprises (a) anchoring elements [anchoring elements (AE_{L1→L3}), herein after], equal to or different from anchoring elements (AE_{L1→L2}), made from at least one thermoplastic polymer [polymer T_{ae(L3)}, herein after], which are additionally adhered to layer (L1) on the opposite side of layer (L2) and optionally (b) a third layer [layer (L3)], wherein said anchoring elements (AE_{L1→L3}) are penetrating into said layer (L3) thereby anchoring layer (L1) on the opposite side of layer (L2) to layer (L3) and wherein said layer (L3) comprises a thermoset polyurethane foam.

10. A method for manufacturing the multilayer assembly according to any of the claims 1 to 9, wherein said method comprises the steps of:
(a) providing a layer (L1) made from a polymer T_{L1} wherein said polymer T_{L1} is selected from the group of ethylene-based polymers, polypropylene-based polymers, polyvinyl chloride (PVC) polymers, polyamide polymers and polycarbonate polymers and mixtures thereof; and
(b) adhering anchoring elements (AE_{L1→L2}) to said layer (L1), thereby providing that said anchoring elements (AE_{L1→L2}) are projecting out from the surface of said layer (L1), and
(c) applying a layer (L2), thereby allowing said anchoring elements (AE_{L1→L2}) to penetrate into said layer (L2), and
(d) optionally, adhering anchoring elements (AE_{L1→L3}) to layer (L1) on the opposite side of layer (L2), and
(e) optionally, applying a layer (L3), thereby allowing said anchoring elements (AE_{L1→L3}) adhered to the opposite side of said layer (L1) to penetrate into said layer (L3).

11. The method according to claim 10, wherein the layer (L1) made from the polymer T_{L1} can be manufactured by processing techniques selected from the group consisting of blow molding, injection molding, inflation extrusion molding, slush molding, thermoforming and rotational molding, preferably rotational molding.

12. The method according to claim 10 or claim 11, wherein in step (b), the anchoring elements (AE_{L1→L2}) are adhered to the layer (L1) by using gluing techniques or welding techniques, preferably welding techniques.

13. The method according to any one of the claims 10 to 12, wherein the anchoring elements (AE_{L1→L2}) are prepared from waste thermoplastic articles wherein said waste thermoplastic articles are reduced in size by using size reduction methods selected from the group consisting of grinding methods, milling methods and chopping methods, preferably grinding methods.

14. A method for manufacturing a shaped article or at least a part thereof, comprising using the multi-layer assembly according to any one of the claims 1 to 9 and said shaped article is selected among a tube, a pipe, a cladding, a film, a sheet, a profile, a plaque and a hollow body.

15. A shaped article or at least a part thereof obtained according to claim 14.

16. The multi-layer assembly according to any one of the claims 1 to 9, wherein the multi-layer assembly is used in an application selected from the group consisting of a maritime; a military; an automotive; a medical; a construction; an agricultural; a packaging; a sport and leisure; a furniture; a water treatment; a refrigeration and a transport application.

## Patentansprüche

1. Eine Mehrschichtanordnung, welche Folgendes umfasst:
i. zumindest eine Schicht [nachstehend Schicht (L1)] hergestellt aus einem thermoplastischen Polymer [Polymer T_{L1}] ausgewählt aus der Gruppe bestehend aus ethylenbasierten Polymeren, polypropylenbasierten Polymeren, Polyvinylchlorid- (PVC) Polymeren, Polyamidpolymeren und Polycarbonatpolymeren und Mischungen davon; und
ii. Verankerungselemente, wobei die erwähnten Verankerungselemente [nachstehend Verankerungselemente (AE_{L1→L2})] an der erwähnten Schicht (L1) befestigt werden und von einer Oberfläche der erwähnten Schicht (L1) hervorragen und wobei die erwähnten Verankerungselemente (AE_{L1→L2}) aus zumindest einem thermoplastischen Polymer [nachstehend Polymer T_{ae]} hergestellt sind, wobei das erwähnte Polymer Tₐₑ gleich ist wie oder anders als das in Schicht (L1) enthaltene Polymer T_{L1}; und
iii. zumindest eine zweite Schicht [Schicht (L2)], wobei die erwähnten Verankerungselemente (AE_{L1→L2}), die an der erwähnten Schicht (L1) befestigt sind, in die erwähnte Schicht (L2) eindringen und dadurch Schicht (L1) an Schicht (L2) verankern, und wobei die erwähnte Schicht (L2) einen wärmegehärteten Polyurethanschaum umfasst.

2. Die Mehrschichtanordnung nach Anspruch 1, wobei die Dicke von Schicht (L1) höchstens 25 mm beträgt.

3. Die Mehrschichtanordnung nach Anspruch 1 oder Anspruch 2, wobei das Polymer Tₐₑ, gleich wie oder anders als das in Schicht (L1) enthaltene Polymer T_{L1}, unabhängig ausgewählt wird aus der Gruppe bestehend aus ethylenbasierten Polymeren, polypropylenbasierten Polymeren, Polyvinylchlorid- (PVC) Polymeren, Polyamidpolymeren und Polycarbonatpolymeren und Mischungen davon.

4. Die Mehrschichtanordnung nach irgendeinem der Ansprüche 1 bis 3, wobei die Verankerungselemente (AE_{L1→L2}) eine beliebige Form haben.

5. Die Mehrschichtanordnung nach irgendeinem der Ansprüche 1 bis 4, wobei die Verankerungselemente (AE_{L1→L2}) vorragende Abschnitte haben, welche Unterschneidungen bereitstellen, um die Haftzugfestigkeit zwischen Schicht (L1) und Schicht (L2), wie gemessen nach dem ASTM D-4541-Standardtest, zu erhöhen.

6. Die Mehrschichtanordnung nach irgendeinem der Ansprüche 1 bis 5, wobei das Gewicht der Verankerungselemente (AE_{L1→L2}) pro Flächeneinheit von Schicht (L1) mindestens 300 g/m² beträgt, bevorzugt mindestens 500 g/m², noch besser mindestens 750 g/m² und noch besser mindestens 900 g/m².

7. Die Mehrschichtanordnung nach irgendeinem der Ansprüche 1 bis 6, wobei mindestens 70 %, bevorzugt mindestens 80 % und noch besser mindestens 90 % der Verankerungselemente einheitlich über die Schicht (L1) verteilt sind.

8. Die Mehrschichtanordnung nach irgendeinem der Ansprüche 1 bis 7, wobei der wärmegehärtete Polyurethanschaum flexible oder starr ist.

9. Die Mehrschichtanordnung nach irgendeinem der Ansprüche 1 bis 8, wobei die Mehrschichtanordnung ferner (a) Verankerungselemente [nachstehend Verankerungselemente (AE_{L1→L3})] umfasst, gleich wie oder anders als Verankerungselemente (AE_{L1→L2}), hergestellt aus zumindest einem thermoplastischen Polymer [nachstehend Polymer T_{ae(L3)}], die zusätzlich an der gegenüberliegenden Seite von Schicht (L2) an Schicht (L1) befestigt sind, und optional (b) eine dritte Schicht [Schicht (L3)], wobei die erwähnten Verankerungselemente (AE_{L1→L3}) in die erwähnte Schicht (L3) eindringen, wodurch Schicht (L1) an der gegenüberliegenden Seite von Schicht (L2) mit Schicht (L3) verankert wird und wobei die erwähnte Schicht (L3) einen wärmegehärteten Polyurethanschaum umfasst.

10. Ein Verfahren zur Herstellung der Mehrschichtanordnung nach irgendeinem der Ansprüche 1 bis 9, wobei das erwähnte Verfahren folgende Schritte umfasst:
(a) Bereitstellen einer Schicht (L1) hergestellt aus einem Polymer T_{L1}, wobei das erwähnte Polymer T_{L1} ausgewählt ist aus der Gruppe bestehend aus ethylenbasierten Polymeren, polypropylenbasierten Polymeren, Polyvinylchlorid- (PVC) Polymeren, Polyamidpolymeren und Polycarbonatpolymeren und Mischungen davon; und
(b) Befestigen von Verankerungselementen (AE_{L1→L2}) an der erwähnten Schicht (L1), wodurch erreicht wird, dass die erwähnten Verankerungselemente (AE_{L1→L2}) aus der Oberfläche der erwähnten Schicht (L1) hervorragen, und
(c) Auftragen einer Schicht (L2), wodurch ermöglicht wird, dass die erwähnten Verankerungselemente (AE_{L1→L2}) in die erwähnte Schicht (L2) eindringen, und
(d) optional, Befestigen von Verankerungselementen (AE_{L1→L3}) an Schicht (L1) an der gegenüberliegenden Seite von Schicht (L2), und
(e) optional, Auftragen einer Schicht (L3), wodurch ermöglicht wird, dass die erwähnten Verankerungselemente (AE_{L1→L3}), die an der gegenüberliegenden Seite der erwähnten Schicht (L1) befestigt sind, in die erwähnte Schicht (L3) eindringen.

11. Das Verfahren nach Anspruch 10, wobei die Schicht (L1), hergestellt aus dem Polymer T_{L1}, durch Verarbeitungstechniken hergestellt werden kann, ausgewählt aus der Gruppe bestehend aus Blasformen, Spritzgießen, Blähstrangformen, Sturzgießen, Thermoformen und Rotationsformen, bevorzugt Rotationsformen.

12. Das Verfahren nach Anspruch 10 oder Anspruch 11, wobei in Schritt (b) die Verankerungselemente (AE_{L1→L2}) an der Schicht (L1) befestigt werden, indem Klebetechniken oder Schweißtechniken eingesetzt werden, bevorzugt Schweißtechniken.

13. Das Verfahren nach irgendeinem der Ansprüche 10 bis 12, wobei die Verankerungselemente (AE_{L1→L2}) aus recycelten thermoplastischen Artikeln aufbereitet werden, wobei die erwähnten recycelten thermoplastischen Artikel zerkleinert werden, indem Zerkleinerungsverfahren angewendet werden, ausgewählt aus der Gruppe bestehend aus Zerreibeverfahren, Mahlverfahren und Hackverfahren, bevorzugt Zerreibeverfahren.

14. Ein Verfahren zur Herstellung eines geformten Artikels oder zumindest eines Teils davon, welches die Verwendung der Mehrschichtanordnung nach irgendeinem der Ansprüche 1 bis 9 umfasst und wobei der erwähnte geformte Artikel ausgewählt ist aus einer Röhre, einem Rohr, einer Umhüllung, einer Folie, einem Blatt, einem Profil, einer Platte und einem Hohlkörper.

15. Ein geformter Artikel oder zumindest ein Teil davon erhalten nach Anspruch 14.

16. Die Mehrschichtanordnung nach irgendeinem der Ansprüche 1 bis 9, wobei die Mehrschichtanordnung in einer Anwendung eingesetzt wird, ausgewählt aus der Gruppe bestehend aus einer maritimen; einer militärischen; einer Automobil-; einer medizinischen; einer Bau-; einer landwirtschaftlichen; einer Verpackungs-; einer Sport- und Freizeit-; einer Möbel-; einer Wasseraufbereitungs-; einer Kühl- und einer Transportanwendung.

## Revendications

1. Ensemble multicouche comprenant :
i. au moins une première couche [couche (L1) ci-après] constituée d'un polymère thermoplastique [polymère TL₁] choisi dans le groupe des polymères à base d'éthylène, des polymères à base de polypropylène, des polymères de poly(chlorure de vinyle) (PVC), des polymères de polyamide et des polymères de polycarbonate et de mélanges de ceux-ci ; et
ii. des éléments d'ancrage, dans lequel lesdits éléments d'ancrage [éléments d'ancrage (AE_{L1→L2}) ci-après] sont collés à ladite couche (L1) et font saillie d'une surface de ladite couche (L1) et dans lequel lesdits éléments d'ancrage (AE_{L1→L2}) sont constitués d'au moins un polymère thermoplastique [polymère Tₐₑ ci-après], dans lequel ledit polymère Tₐₑ est égal ou différent du polymère T_{L1} compris dans la couche (L1) ; et
iii. au moins une deuxième couche [couche (L2)], dans lequel lesdits éléments d'ancrage (AE_{L1→L2}) collés à ladite couche (L1) pénètrent dans ladite couche (L2) en ancrant ainsi la couche (L1) à la couche (L2) et dans lequel ladite couche (L2) comprend une mousse de polyuréthane thermodurcissable.

2. Ensemble multicouche selon la revendication 1, dans lequel l'épaisseur de la couche (L1) est au maximum de 25 mm.

3. Ensemble multicouche selon la revendication 1 ou la revendication 2, dans lequel le polymère Tₐₑ, égal ou différent du polymère T_{L1} compris dans la couche (L1) est indépendamment choisi dans le groupe des polymères à base d'éthylène, des polymères à base de polypropylène, des polymères de poly(chlorure de vinyle) (PVC), des polymères de polyamide et des polymères de polycarbonate et de mélanges de ceux-ci.

4. Ensemble multicouche selon l'une quelconque des revendications 1 à 3, dans lequel les éléments d'ancrage (AEL1→L2) ont une forme quelconque.

5. Ensemble multicouche selon l'une quelconque des revendications 1 à 4, dans lequel les éléments d'ancrage (AE_{L1→L2}) ont des parties saillantes qui forment des dépouilles pour augmenter la force d'arrachage entre la couche (L1) et la couche (L2), comme mesuré selon l'essai standard D-4541 de la norme ASTM.

6. Ensemble multicouche selon l'une quelconque des revendications 1 à 5, dans lequel le poids des éléments d'ancrage (AE_{L1→L2}) par unité de surface de la couche (L1) est d'au moins 300 g/m², de préférence d'au moins 500 g/m², mieux encore d'au moins 750 g/m² et bien mieux encore d'au moins 900 g/m².

7. Ensemble multicouche selon l'une quelconque des revendications 1 à 6, dans lequel au moins 70 %, de préférence au moins 80 % et mieux encore au moins 90 % des éléments d'ancrage sont uniformément distribués sur la couche (L1).

8. Ensemble multicouche selon l'une quelconque des revendications 1 à 7, dans lequel la mousse de polyuréthane thermodurcissable est souple ou rigide.

9. Ensemble multicouche selon l'une quelconque des revendications 1 à 8, dans lequel l'ensemble multicouche comprend en outre (a) des éléments d'ancrage [éléments d'ancrage (AE_{L1→L3}) ci-après], égaux ou différents des éléments d'ancrage (AE_{L1→L2}), constitués d'au moins un polymère thermoplastique [polymère T_{ae(L3)} ci-après], qui sont collés de manière supplémentaire à la couche (L1) du côté opposé de la couche (L2) et éventuellement (b) une troisième couche [couche (L3)], dans lequel lesdits éléments d'ancrage (AE_{L1→L3}) pénètrent dans ladite couche (L3) en ancrant ainsi la couche (L1) sur le côté de la couche (L2) opposé à la couche (L3) et dans lequel ladite couche (L3) comprend une mousse de polyuréthane thermodurcissable.

10. Procédé de fabrication de l'ensemble multicouche selon l'une quelconque des revendications 1 à 9, dans lequel ledit procédé comprend les étapes consistant à :
(a) fournir une couche (L1) constituée d'un polymère T_{L1}, dans lequel ledit polymère T_{L1} est choisi dans le groupe des polymères à base d'éthylène, des polymères à base de polypropylène, des polymères de poly(chlorure de vinyle) (PVC), des polymères de polyamide et des polymères de polycarbonate et de mélanges de ceux-ci ; et
(b) coller les éléments d'ancrage (AE_{L1→L2}) à ladite couche (L1), en faisant ainsi en sorte que lesdits éléments d'ancrage (AE_{L1→L2}) fassent saillie de la surface de ladite couche (L1) et
(c) appliquer une couche (L2), en permettant ainsi auxdits éléments d'ancrage (AE_{L1→L2}) de pénétrer dans ladite couche (L2), et
(d) éventuellement, coller les éléments d'ancrage (AE_{L1→L3}) à la couche (L1) sur le côté opposé de la couche (L2), et
(e) éventuellement, appliquer une couche (L3), en permettant ainsi auxdits éléments d'ancrage (AE_{L1→L3}) collés au côté opposé de ladite couche (L1) de pénétrer dans ladite couche (L3).

11. Procédé selon la revendication 10, dans lequel la couche (L1) constituée du polymère T_{L1} peut être fabriquée par des techniques de traitement choisies dans le groupe constitué d'un moulage par soufflage, d'un moulage par injection, d'un moulage par extrusion et gonflement, d'un moulage par immersion, d'un thermoformage et d'un moulage par rotation, de préférence d'un moulage par rotation.

12. Procédé selon la revendication 10 ou la revendication 11, dans lequel, à l'étape (b), les éléments d'ancrage (AE_{L1→L2}) sont collés à la couche (L1) en utilisant des techniques de collage ou des techniques de soudage, de préférence des techniques de soudage.

13. Procédé selon l'une quelconque des revendications 10 à 12, dans lequel les éléments d'ancrage (AE_{L1→L2}) sont préparés à partir d'articles thermoplastiques résiduaires, dans lequel lesdits articles thermoplastiques résiduaires sont réduits en taille en utilisant des procédés de réduction de taille choisis dans le groupe constitué de procédés de meulage, de procédés de fraisage et de procédés de découpage, de préférence des procédés de meulage.

14. Procédé de fabrication d'un article moulé ou d'au moins une partie de celui-ci, comprenant l'utilisation de l'ensemble multicouche selon l'une quelconque des revendications 1 à 9 et ledit article moulé est choisi parmi un tube, un tuyau, un placage, un film, une feuille, un profilé, une plaque et un corps creux.

15. Article moulé ou au moins une partie de celui-ci obtenu(e) selon la revendication 14.

16. Ensemble multicouche selon l'une quelconque des revendications 1 à 9, dans lequel l'ensemble multicouche est utilisé dans une application choisie dans le groupe constitué d'une application maritime ; d'une application militaire ; d'une automobile ; d'une application médicale ; d'une construction ; d'une application agricole ; d'une de conditionnement ; d'une application de sport et loisir ; d'une application meuble ; d'une application de traitement d'eau ; d'une application de réfrigération et d'une application de transport.
